# EUROPÄISCHE PATENTSCHRIFT

(11) **EP 2 846 043 B1**
(45) Veröffentlichungstag und Bekanntmachung des Hinweises auf die Patenterteilung: **22.01.2020**
(21) Anmeldenummer: 13183547.2
(22) Anmeldetag: 09.09.2013
(51) Int. Cl.: F04D 19/04, F04D 27/00, G01K 13/08

(54) **BERECHNUNG DER ROTORTEMPERATUR EINER VAKUUMPUMPE MIT HILFE DES MOTORSTROMS ODER DER MOTORLEISTUNG**
CALCULATION OF THE ROTOR TEMPERATURE OF A VACUUM PUMP USING THE MOTOR CURRENT OR POWER
CALCUL DE LA TEMPÉRATURE DU ROTOR D'UNE POMPE À VIDE À L'AIDE DU COURANT OU DE LA PUISSANCE DU MOTEUR

(43) Veröffentlichungstag der Anmeldung: 11.03.2015
(73) Patentinhaber: Leybold GmbH, 50968 Köln (DE)
(72) Erfinder: Schwarz, Wolfgang, 63589 Linsengericht (DE); Graf, Tobias, 52379 Langerwehe (DE); Liessmann, Markus, 41542 Dormagen (DE)
(74) Vertreter: dompatent von Kreisler Selting Werner - Partnerschaft von Patent- und Rechtsanwälten mbB

(56) Entgegenhaltungen:
- EP-A1- 2 317 148
- EP-A2- 0 836 009
- DE-A1- 10 151 682
- JP-A- 2009 074 512

## Beschreibung

Die Erfindung betrifft ein Verfahren zur Berechnung einer Temperatur eines überwachten Bauteils einer Vakuumpumpe, insbesondere einer Turbomolekularpumpe.

In einer Turbomolekularpumpe werden zur Erzeugung eines Hochvakuums ein Gas bzw. Gasteilchen durch rotierende Schaufeln des Pumpenrotors und die feststehenden Schaufeln des Pumpenstators auf ein Vielfaches des Eingangsdruckes verdichtet. Die durch die Gasverdichtung und Gasreibung verursachte Gaserwärmung wird überwiegend über den Pumpenrotor und den Pumpenstator wieder abgeführt. Während die Kühlung des Pumpenstators durch ein Kühlfluid führende Kühlkanäle erfolgen kann, ist die aktive Pumpenrotorkühlung problematisch, da dem rotierenden Pumpenrotor kein Kühlfluid zugeführt werden kann. Unter ungünstigen Betriebsbedingungen kann der Pumpenrotor daher überhitzen. Bei Überhitzung des Pumpenrotors über eine maximal zulässige Rotortemperatur besteht die Gefahr der Zerstörung des Pumpenrotors und, als Folge davon, des Pumpenstators. Die Turbomolekularpumpe muss daher stets unterhalb der maximal zulässigen Rotortemperatur betrieben werden.

Eine direkte Messung der Rotortemperatur ist wegen der schwierigen Signalübertragung von dem schnelldrehenden Pumpenrotor zu dem Stator nur mit großem Aufwand möglich. Die Turbomolekularpumpe weist daher eine Steuervorrichtung auf, die die Motorleistung auf eine vorgegebene konstante Motor-Maximalleistung begrenzt, so dass auch die Pumpleistung und die damit korrelierende Gas- und Rotorerwärmung auf einen konstanten Maximalwert begrenzt sind.

Die zulässige Motor-Maximalleistung wird rechnerisch und/oder experimentell ermittelt, indem für den Pumpenbetrieb die ungünstigsten Prozessbedingungen angenommen werden, beispielsweise ein thermisch sich ungünstig verhaltendes Gas, eine schlechte Pumpenstator-Kühlung, hohe Umgebungstemperaturen etc. Die zulässige Motor-Maximalleistung wird so gewählt, dass der Pumpenrotor auch unter den ungünstigsten Prozessbedingungen die maximal zulässige Rotortemperatur nicht überschreiten kann. Durch die Festlegung einer konstanten Motor-Maximalleistung wird die Motorleistung auf die vorgegebene Maximalleistung auch dann beschränkt, wenn die Prozessbedingungen günstiger sind, als für die Berechnung der Motor-Maximalleistung angenommen. Die Motorleistung wird also auch dann auf die vorgegebene Motor-Maximalleistung begrenzt, wenn die tatsächliche Rotortemperatur die maximal zulässige Rotortemperatur noch nicht erreicht hat. Da die der Ermittlung der maximal zulässigen Motor-Maximalleistung zugrundegelegten extremen Prozessbedingungen in der Praxis nur einen seltenen Ausnahmefall darstellen, wird die Ausgangsleistung der Turbomolekularpumpe in der Regel auf einen Wert weit unterhalb eines tatsächlich thermisch zulässigen Wertes beschränkt.

Zur Verbesserung dieses Standes der Technik ist es aus EP 1 377 752 B1 bekannt mehrere Sensoren vorzusehen, durch die an verschiedenen Stellen des Stators die Temperatur gemessen wird. In Abhängigkeit der gemessenen Temperaturen wird eine zulässige Motor-Maximalleistung mit Hilfe eines mathematischen Verfahrens bestimmt.

Untersuchungen haben gezeigt, dass mit dem in EP 1 377 752 B1 beschriebenen Verfahren zwar eine deutliche Steigerung der Pumpenleistung erzielt werden kann, jedoch insbesondere bei Prozessänderungen oder dynamischen Prozessen noch weitere Leistungssteigerungen möglich sein müssten. Typische Prozessänderungen wären beispielsweise die Start-Stop Situation, Standby Zeiträume, in denen die Vakuumpumpe keine oder nur geringfügige Menge an Gas fördert und bei Änderung des zu pumpenden Gases, insbesondere hinsichtlich der Gasart und/oder Gasmenge.

Aus EP 0 836 009 A2 ist ein Verfahren zur Berechnung einer Temperatur eines überwachten Bauteils einer Vakuumpumpe mit den im Oberbegriff des Anspruchs 1 definierten Merkmalen bekannt.

Aus JP 2009 074512 A ist ein weiteres Verfahren zur Berechnung einer Temperatur eines überwachten Bauteils einer Vakuumpumpe bekannt.

Aufgabe der Erfindung ist es ein Verfahren zu schaffen, mit dem die Berechnung einer Temperatur eines überwachten Bauteils einer Vakuumpumpe verbessert werden kann.

Die Lösung der Aufgabe erfolgt erfindungsgemäß durch die Merkmale des Anspruchs 1.

Mit Hilfe des erfindungsgemäßen Verfahrens kann eine Temperatur eines zu überwachenden Bauteils einer Vakuumpumpe, insbesondere einer Turbomolekularpumpe, berechnet werden. Bei den zu überwachenden Bauteilen handelt es sich insbesondere um den Pumpenrotor. Von besonderem Interesse ist hierbei nicht nur die Temperatur eines metallischen Teils des Pumpenrotors, beispielsweise einer Turbomolekularstufe, sondern auch die Temperatur eines, beispielsweise aus CFK hergestellten, zylindrischen Rotors einer Holweckstufe. Auf Grund der hohen Drehzahl und der möglichen prozessbedingten Belegungen von Rotor und Holweckstufe ist die direkte Bestimmung der Temperaturen von Turbomolekularrotor und Holweckrotor nicht oder nur sehr unzuverlässig möglich. Von besonderem Interesse ist auch die Temperatur der Lager des Turbomolekularpumpen-Rotors, wobei insbesondere das druckseitige Lager von Interesse ist.

Die Temperaturbestimmung einzelner Bauteile kann hierbei über Sensoren erfolgen. Dies ist insbesondere bei sich nicht bewegenden Bauteilen, wie dem Pumpenstator oder auch der Pumpenelektronik, auf einfache Weise möglich. Auch die Temperatur des Pumpenrotors kann zumindest im Bereich eines Rotorschafts oder einer Rotorwelle über Magnete und eine gemessene Permeabilitätsänderung wie in EP 2 108 930 beschrieben oder mittels Pyrometer bestimmt werden. Dies ist jedoch im Bereich der Rotorschaufeln und auch bei einem CFK-Rohr einer Holweckstufe nicht möglich, da hier keine Magnete angebracht werden können und pyrometrische Sensoren durch prozessbedingte Belegungen teilweise oder vollständig ausfallen können. Erfindungsgemäß wird daher im Wesentlichen vorzugsweise vollständig auf Sensoren im Prozessgas berührenden Bereich verzichtet und die Temperatur eines überwachten Bauteils mit Hilfe einer mathematischen Funktion bestimmt. Die mathematische Funktion kann hierbei einerseits unmittelbar mit Hilfe von Sensoren gemessene Temperaturen einzelner Bauteile, wie des Pumpenstators und der geleichen, zur Berechnung nutzen. Andererseits können Modelle, beispielsweise zur Berechnung der Rotortemperatur hinterlegt sein.

Erfindungsgemäß weist die mathematische Funktion ein Korrekturglied auf. Mit Hilfe des Korrekturglieds wird eine betriebszustandsabhängige Messgröße mittels eines Korrekturmoduls, wie eines Filters und der gleichen, an tatsächlich zu erwartende Temperaturänderungen des überwachten Bauteils angepasst. Eine betriebszustandsabhängige Messgröße ist beispielsweise die Stromaufnahme des Antriebsmotors der Vakuumpumpe. Hierbei handelt es sich um eine sehr sensible Messgröße, die eine Änderung des Betriebszustands unmittelbar wiederspiegelt. Sobald beispielsweise eine andere Gasart oder ein anderes Gasvolumen von der Pumpe gepumpt wird, ändert sich die Stromaufnahme sofort wegen der geänderten Gasreibung an den Rotoren insbesondere den Turbomolekularrotoren und/oder Holweckrotoren. Die Temperatur der Bauteile folgt dieser Änderung auf Grund ihrer thermischen Trägheit jedoch nur allmählich. Bei einer Erhöhung des Stroms würde bei einer Berechnung ohne Korrekturglied beispielsweise die berechnete Rotortemperatur auch unmittelbar ansteigen Hierbei handelt es sich jedoch nicht um die tatsächliche aktuelle Rotortemperatur, da sich der Rotor langsam erwärmt. Bei einer Änderung der Gasmenge oder Gasart weist der Rotor nach ca. einer Stunde zwei/Drittel der Rotortemperatur auf, die bei dieser Gasart/Gasmenge bei einem dauerhaften Betrieb zu erwarten wäre. Erst nach ca. drei Stunden ist die Rotortemperatur auf diese Maximaltemperatur angestiegen. Eine Berechnung der Rotortemperatur ohne ein entsprechendes erfindungsgemäßes Korrekturglied würde somit dazu führen, dass unmittelbar bei Änderung der Gasart/Gasmenge die erst nach ca. drei Stunden erreichte Rotortemperatur als tatsächliche aktuelle Temperatur der Steuerung der Pumpe hinterlegt wird. Dies hat zur Folge, dass bei gegebenenfalls Überschreiten einer zulässigen Maximaltemperatur des Rotors die Motordrehzahl sofort reduziert wird, um ein Überhitzen des Rotors zu vermeiden. Dies ist im aktuellen Zustand der Pumpe jedoch nicht erforderlich, da der Temperaturanstieg des Rotors relativ langsam erfolgt. Mit Hilfe des erfindungsgemäßen Korrekturgliedes kann diese relativ langsame Temperaturänderung berücksichtigt werden. Dies hat zur Folge, dass ein Reduzieren der Motordrehzahl zur Vermeidung von Überhitzungen des Rotors erst zu einem späteren Zeitpunkt erfolgt. Hierdurch kann die Leistung der Pumpe verbessert werden.

Auch die Temperaturen in einem CFK-Rohr einer Holweckstufe oder einem druckseitigen Rotorlager steigen bei Änderung der Gasart und/oder Gasmenge nicht schlagartig an, sondern unterliegen einer zeitlichen Verzögerung. Somit hat das Korrekturglied auch bei der Bestimmung der Temperaturen dieser Bauteiler oder anderer zu überwachender Bauteile den Effekt, dass die Pumpenleistung erhöht werden kann. Die bauteilabhängige zeitliche Verzögerung des Temperaturanstiegs kann somit erfindungsgemäß über das Korrekturglied berücksichtigt werden. Hierdurch kann die Leistung der Vakuumpumpe deutlich verbessert werden.

Vorzugsweise wird durch das mindestens eine Korrekturglied eine betriebszustandsabhängige Messgröße berücksichtigt, die starken Schwankungen unterliegt. Erfindungsgemäß handelt es sich bei dieser Messgröße um die Strom- oder Leistungsaufnahme des Antriebsmotors. Beispielsweise kann beim Wechsel vom Betrieb mit geringer Gaslast (z.B. am Ende des Evakuierens) zu einem Beschichtungsprozess mit hoher Gaslast der Motorstrom innerhalb von wenigen Sekunden von 1A auf 5A oder mehr ansteigen.

Bei dem mindestens einen Korrekturmodul, das in dem Korrekturglied angeordnet ist, handelt es sich in bevorzugter Ausführungsform um einen Signalfilter. Insbesondere handelt es sich um einen Filter für das Stromsignal. Hierbei kann es sich um einen Tiefpassfilter handeln, der vorzugsweise in der mathematischen Funktion abgebildet ist.

Desweiteren ist es bevorzugt, dass das Korrekturglied ein konstantes Summenglied aufweist. Hierbei kann es sich bei einem Korrekturglied, das als zustandsabhängige Messgröße den Motorstrom berücksichtigt, um einen konstanten Strom I₀ handeln. Ein entsprechendes konstantes Summenglied ist in der Berechnung vorzugsweise vor dem Korrekturmodul angeordnet.

Desweiteren weist das Korrekturglied erfindungsgemäß zusätzlich, oder an Stelle des Summenglieds ein variables Summenglied auf. Dieses ist vorzugsweise wiederum in der mathematischen Berechnung vor dem Korrekturmodul angeordnet. Bei dem variablen Summenglied kann es sich um ein aus einer Motorfrequenz abgeleitetes Summenglied handeln. Auch ist es möglich, dass es sich hierbei um einen Faktor handelt.

Erfindungsgemäß berücksichtigt das variable Summenglied die Frequenz des Antriebsmotors. Insbesondere wird die zeitliche Ableitung der Frequenz des Antriebsmotors berücksichtigt. Zur weiteren Verfeinerung des mathematischen Verfahrens ist es bevorzugt, dass das variable Summenglied zusätzlich einen insbesondere negativen Korrekturfaktor mit umfasst.

Bei einer bevorzugten Weiterbildung des erfindungsgemäßen Verfahrens wird zunächst die Temperatur mehrerer Bauteile bestimmt. Die Temperaturbestimmung einzelner Bauteile, wie des Rotors, des Stators, der Pumpenelektronik und der gleichen, kann unmittelbar über Sensoren und/oder mittelbar über Berechnungsmodelle erfolgen. Innerhalb der mathematischen Funktion erfolgt ein Verknüpfen der mehreren Bauteiltemperaturen.

Insbesondere wird die Temperatur von Bauteilen die schwer direkt messbar sind, wie beispielsweise die Temperatur des Rotors, mittelbar unter zur Hilfenahme mathematischer Modelle bestimmt. Beispielsweise kann die Temperatur an einer Rotorwelle oder an einem Rotorschaft über Permeabilitätsänderung bestimmt werden und daraus in Abhängigkeit der Ausgestaltungen des Rotors die Temperatur des Rotors selbst insbesondere wenn der Rotor aus einem gut wärmeleitfähigen Material besteht. Entsprechende mathematische Modelle können mit Hilfe experimenteller Daten aufgestellt werden. Ein derartiges Modell zur Berechnung der Rotortemperatur ist beispielsweise in EP 2 108 930 beschrieben.

Ähnliche Modelle sind auch zur Berechnung der Statortemperatur (Motorstator) oder der Temperatur der Elektronik, insbesondere des Wandler, bekannt. Diese Modelle beruhen beispielsweise auf der elektrischen Leistung P = I² × R.

Die durch Messung und/oder durch mathematische Funktionen ermittelten Temperaturen mehrerer Bauteile werden vorzugsweise durch Aufsummieren miteinander verknüpft. Hierbei werden die einzelnen Temperaturen vorzugsweise vor dem Aufsummieren mit Korrekturfaktoren multipliziert. Bei den Korrekturfaktoren handelt es sich in bevorzugter Ausführungsform um gasartabhängige Korrekturfaktoren. Ferner werden vorzugsweise unterschiedliche Korrekturfaktoren eingesetzt, je nachdem welche Temperatur eines Bauteils überwacht wird. So werden unterschiedliche Faktoren beispielsweise bei der Bestimmung der Temperatur des CFK-Rohrs, des druckseitigen Lagers und der gleichen verwendet.

In einer bevorzugten Ausführungsform wird das Korrekturglied zu den verknüpften Bauteiltemperaturen addiert, wobei auch das Temperaturglied ebenfalls zuvor mit einem Korrekturfaktor multipliziert wird. Dieser ist wiederum in bevorzugter Ausführungsform gasart-und/oder bauteilabhängig.

Besonders bevorzugt ist die Anwendung des vorstehend beschriebenen erfindungsgemäßen Verfahrens bei Vakuumpumpen wie Turbomolekularvakuumpumpen. Hier ist es insbesondere zu Temperaturbestimmungen eines CFK-Rohrs einer Holweckpumpe geeignet. Insbesondere bei kurzfristig auftretenden Änderungen der Betriebsbedingungen erfolgt mit herkömmlichen Verfahren eine falsche Temperaturberechnung. Diese kann mit Hilfe des erfindungsgemäßen Verfahrens deutlich verbessert werden, so dass die Pumpenleistung verbessert wird.

Mit dem erfindungsgemäßen Verfahren kann somit einerseits die aktuelle Temperatur eines schwer oder nicht direkt zu messenden Bauteils bestimmt werden. Ferner ist es mit dem erfindungsgemäßen Verfahren möglich, Temperaturvorhersagen zu treffen. So kann beispielsweise berechnet werden, wann ein bestimmtes Bauteil eine kritische Temperatur erreicht, so dass gegebenenfalls unter Berücksichtigung der Trägheit des Systems rechtzeitig beispielsweise eine Änderung der Motordrehzahl erfolgen kann.

Gegebenenfalls sind kurzfristige Temperaturüberlastungen auch zulässig. Auch diese können mit Hilfe des erfindungsgemäßen Verfahrens berechnet werden, so dass berechnet werden kann, um wie viel die zulässige Maximaltemperatur eines Bauteil und in welchem Zeitraum diese überschritten wird. Anhand dieser Aussage kann sodann beispielsweise anhand von hinterlegten Tabellen oder dergleichen entschieden werden, ob eine entsprechend kurzfristige Temperaturüberlastung eines Bauteils akzeptabel ist.

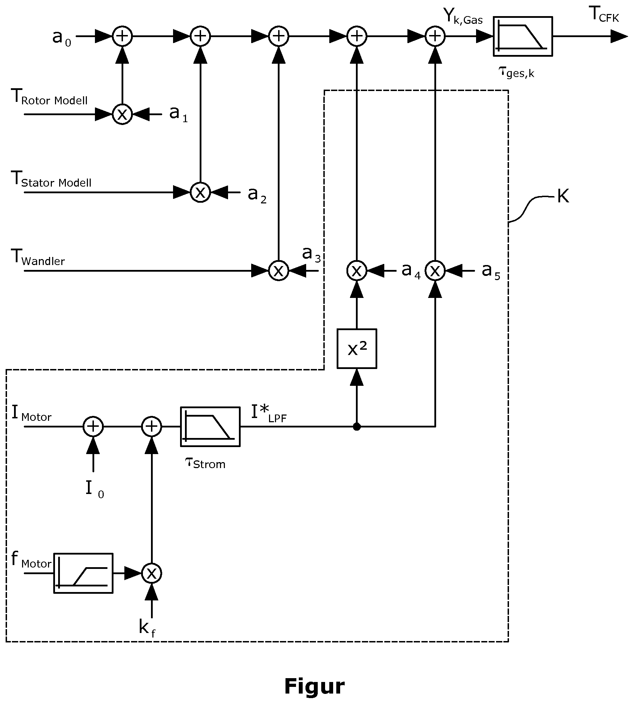

Nachfolgend wird das erfindungsgemäße Verfahren in einer besonders bevorzugten Ausführungsform anhand einer schematischen Darstellung in der Figur näher erläutert.

Die schematisch dargestellte mathematische Gleichung kann beispielsweise zur Bestimmung einer Temperatur des CFK-Rohrs, das heißt der Temperatur T_{CFK} genutzt werden. Ausgegangen wird hierbei von einer gasartabhängigen Konstanten a₀. Diese ist ferner auch abhängig von dem zu bestimmenden Bauteil. Die Konstanten a₀, a₁, a₂, a₃...aᵢ sind jeweils gasart- und bauteilabhängig.

Zu der Konstanten a₀ werden in dem dargestellten Ausführungsbeispiel Temperaturen des Rotors, des Stators und des Wandlers, das heißt die Temperaturen T_{Rotor}, T_{Stator} und T_{Wandler} addiert. Hier werden im dem dargestellten Beispiel die Temperaturen des Rotors und des Stators mit Hilfe eines mathematischen Modells bestimmt, wobei die Temperatur des Wandlers unmittelbar mit Hilfe eines Sensors gemessen wird. Die drei auf diese Weise ermittelten Temperaturen werden vor dem Aufsummieren mit einem Faktor a₁, a₂, bzw. a₃ multipliziert.

Die nächsten beiden Summanden der mathematischen Funktion ergeben sich aus dem in der Figur gestrichelt umrandeten Korrekturglied K. Mit Hilfe des Korrekturglieds K wird insbesondere berücksichtigt, dass eine betriebszustandsabhängige Messgröße die Temperaturberechnung verfälschen kann. Bei der betriebszustandsabhängigen Messgröße handelt es sich insbesondere um einen Strom des Motors I_{Motor}. Diese wird in der Form berücksichtigt, dass zunächst eine Konstante I₀ zu dem aktuellen Motorstrom addiert wird. Als nächster Summand des Korrekturglieds wird die Motorfrequenz f_{Motor} berücksichtigt. Von der Motorfrequenz wird zunächst die Ableitung nach der Zeit df/dt gebildet, und sodann mit einem Faktor k_{f} multipliziert. Bei der bevorzugten mathematischen Berechnungsformel ist der Faktor k_{f} negativ. Auch dieser Faktor ist wiederum gasabhängig und abhängig von dem Bauteil dessen Temperatur ermittelt werden soll.

Nach Aufsummieren der Stromkonstanten I₀ und des die Motorfrequenz berücksichtigen Ausdrucks, erfolgt die Anwendung eines Korrekturmoduls, bei dem es sich im dargestellten Ausführungsbeispiel um einen Filter für das Stromsignal mit einer Zeitkonstanten *τ*_{Strom} handelt. Es ergibt sich sodann ein durch die Verwendung des Filters geglätteter Stromwert I^{*}_{LPF}.

Der Stromwert I^{*}_{LPF} wird sodann aufgeteilt, so dass einerseits das Quadrat des Wertes I^{*}_{LPF} mit einem Faktor a₄ multipliert, und andererseits der Wert I^{*}_{LPF} unmittelbar mit einem Faktor a₅ multipliziert wird. Die beiden sich hieraus ergebenen Werte werden sodann zu den bereits bestehenden Temperaturwerten addiert.

Anschließend erfolgt das Vorsehen eines weiteren Korrekturgliedes *τ*_{GES}, ₖ. Dieser Filter dient einerseits dazu, das Signalrauschen, das durch Messrauschen der Messgrößen T_{Rotor} und T_{Wandler} versursacht wird, zu dämpfen und andererseits dazu eine genauere Anpassung des Zeitverlaufs der berechneten Größe (hier T_{CFK}) zu erreichen.

## Patentansprüche

1. Verfahren zur Berechnung einer Temperatur eines überwachten Bauteils einer Vakuumpumpe, insbesondere einer Turbomolekularpumpe, mit den Schritten:
Bestimmen der Temperatur zumindest eines Bauteils, insbesondere eines Pumpenrotors, eines Pumpenstators und/oder einer Pumpenelektronik, wobei diese Temperatur hiernach als "erste Bauteiltemperatur" bezeichnet wird,
Bestimmen der Temperatur des zu überwachenden Bauteils mittels einer mathematischen Funktion,
wobei in der mathematischen Funktion die erste Bauteiltemperatur und ein Korrekturglied (K) addiert werden,
wobei das Korrekturglied als Eingangsgröße mindestens eine betriebszustandsabhängige Messgröße (I) verwendet,
wobei die betriebszustandsabhängige Messgröße eine Energieaufnahme, insbesondere die Stromaufnahme eines Bauteils, insbesondere eines Antriebsmotors des Pumpenrotors ist,
wobei das Korrekturglied die betriebszustandsabhängige Messgröße (I) mittels eines Korrekturmoduls an eine tatsächlich zu erwartende Temperaturänderung des überwachten Bauteils anpasst,
wobei eine bauteilabhängige zeitliche Verzögerung eines Temperaturanstiegs über das Korrekturglied berücksichtigt wird, **dadurch gekennzeichnet, dass**
das Korrekturglied ein variables Summenglied aufweist, das die Frequenz des Antriebsmotors, insbesondere die Ableitung hiervon nach der Zeit (k_{f}xdf/dt), berücksichtigt.

2. Verfahren nach Anspruch 1, bei welchem die betriebszustandsabhängige Messgröße starken Schwankungen unterliegt.

3. Verfahren nach Anspruch 1 oder 2, bei welchem das Korrekturmodul einen Signalfilter, insbesondere für das Stromsignal des Antriebsmotors, aufweist.

4. Verfahren nach einem der Ansprüche 1 - 3, bei welchem das Korrekturglied insbesondere vor dem Korrekturmodul ein konstantes Summenglied (I₀) aufweist.

5. Verfahren nach einem der Ansprüche 1 - 4, **dadurch gekennzeichnet, dass** das variable Summenglied einen insbesondere negativen Korrekturfaktor (kf) umfasst.

6. Verfahren nach einem der Ansprüche 1 - 5, **dadurch gekennzeichnet, dass** die Temperaturen mehrerer Bauteile bestimmt werden, und die Bauteiltemperaturen mathematisch miteinander verknüpft werden.

7. Verfahren nach einem der Ansprüche 1 - 6, **dadurch gekennzeichnet, dass** die Berechnung der Bauteiltemperaturen zumindest teilweise mittels mathematischer Modelle bestimmt wird.

8. Verfahren nach Anspruch 6, bei welchem das Verknüpfen der Bauteiltemperaturen durch Aufsummieren erfolgt.

9. Verfahren nach einem der Ansprüche 1 - 8, bei welchem die bestimmten Bauteiltemperaturen und das Korrekturglied (K) zumindest teilweise einen gasartabhängigen Korrekturfaktor aufweisen.

10. Verfahren nach einem der Ansprüche 1 - 9, bei welchem in Abhängigkeit des Bauteils die Temperatur berechnet wird, und unterschiedliche Bauteil-Koeffizienten in die mathematische Funktion eingesetzt werden.

## Claims

1. A method for calculating a temperature of a monitored component of a vacuum pump, in particular a turbomolecular pump, comprising the steps of:
determining the temperature of at least one component, in particular a pump rotor, a pump stator and/or a pump electronic system, wherein this temperature is hereafter referred to as "first component temperature",
determining the temperature of the component to be monitored by means of a mathematical function,
wherein, in the mathematical function, the first component temperature and a correction term (K) are added,
wherein the correction term, as an input variable, uses at least one operating-condition-dependent measured variable (I),
wherein the operating-condition-dependent measured variable is an energy consumption, in particular the current consumption of a component, in particular a drive motor of the pump rotor,
wherein the correction term adapts, by means of a correction module, the operating-condition-dependent measured variable (I) to an actually to be expected temperature change of the monitored component,
wherein a component-dependent time delay of a temperature rise is taken into consideration via the correction term,
**characterized in that**
the correction term comprises a variable sum term which takes into consideration the frequency of the drive motor, in particular its derivation with respect to time (k_{f} x df/dt).

2. The method according to claim 1, wherein the operating-condition-dependent measured variable is subject to strong fluctuations.

3. The method according to claim 1 or 2, wherein the correction module comprises a signal filter, in particular for the current signal of the drive motor.

4. The method according to any one of claims 1-3, wherein the correction term comprises, in particular before the correction module, a constant sum term (Io).

5. The method according to any one of claims 1-4, **characterized in that** the variable sum term comprises in particular a negative correction factor (kf).

6. The method according to any one of claims 1-5, **characterized in that** the temperatures of a plurality of components are determined and the component temperatures are mathematically linked with each other.

7. The method according to any one of claims 1-6, **characterized in that** the calculation of the component temperatures is at least partly performed by means of mathematical models.

8. The method according to claim 6, wherein linking of the component temperatures is performed by adding-up.

9. The method according to any one of claims 1-8, wherein the determined component temperatures and the correction term (K) at least partly comprise a gas-type-dependent correction factor.

10. The method according to any one of claims 1-9, wherein the temperature is calculated depending on the component and different component coefficients are inserted into the mathematical function.

## Revendications

1. Procédé de calcul de la température d'un composant surveillé d'une pompe à vide, en particulier d'une pompe turbomoléculaire, comportant les étapes consistant à :
déterminer la température d'au moins un composant, en particulier d'un rotor de pompe, d'un stator de pompe et/ou d'une électronique de pompe, cette température étant appelée par la suite « première température de composant »,
déterminer la température du composant à surveiller à l'aide d'une fonction mathématique,
où, dans la fonction mathématique, la première température de composant et un correcteur (K) sont additionnés,
où le correcteur utilise en tant que valeur d'entrée au moins une valeur de mesure (I) dépendante de l'état de fonctionnement,
où la valeur de mesure dépendante de l'état de fonctionnement est une intensité absorbée, en particulier la consommation électrique d'un composant, en particulier d'un moteur d'entraînement du rotor de pompe,
dans lequel le correcteur adapte, à l'aide d'un module de correction, la valeur de mesure (I) dépendante de l'état de fonctionnement à une variation de température réellement attendue du composant surveillé,
dans lequel un retard temporel, dépendant du composant, d'une augmentation de température est pris en compte via le correcteur, **caractérisé en ce que** le correcteur présente une somme variable qui prend en compte la fréquence du moteur d'entraînement, en particulier sa dérivée en fonction du temps (k_{f} x df/dt).

2. Procédé selon la revendication 1, dans lequel la valeur de mesure dépendante de l'état de fonctionnement est soumise à de fortes fluctuations.

3. Procédé selon la revendication 1 ou 2, dans lequel le module de correction présente un filtre de signal, en particulier pour le signal de courant du moteur d'entraînement.

4. Procédé selon l'une des revendications 1 à 3, dans lequel le correcteur présente une somme constante (I₀), en particulier avant le module de correction.

5. Procédé selon l'une des revendications 1 à 4, **caractérisé en ce que** la somme variable comprend un facteur de correction (k_{f}), en particulier négatif.

6. Procédé selon l'une des revendications 1 à 5, **caractérisé en ce que** les températures de plusieurs composants sont déterminées, et **en ce que** les températures de composant sont combinées de manière mathématique.

7. Procédé selon l'une des revendications 1 à 6, **caractérisé en ce que** le calcul des températures de composant est déterminé au moins partiellement à l'aide de modèles mathématiques.

8. Procédé selon la revendication 6, dans lequel la combinaison des températures de composant intervient par sommation.

9. Procédé selon l'une des revendications 1 à 8, dans lequel les températures de composant déterminées et le correcteur (K) présentent au moins partiellement un facteur de correction dépendant du type de gaz.

10. Procédé selon l'une des revendications 1 à 9, dans lequel la température est calculée en fonction du composant, et différents coefficients de composant sont utilisés dans la fonction mathématique.
